# EUROPEAN PATENT SPECIFICATION

(11) **EP 2 661 182 B1**
(45) Date of publication and mention of the grant of the patent: **19.11.2014**
(21) Application number: 11805887.4
(22) Date of filing: 30.12.2011
(51) Int. Cl.: A23L 3/34, A23B 7/14

(54) **DEVICE FOR CONTROLLING THE METABOLISM OF FRUITS CONTAINED IN REFRIGERATED STORAGE CELLS**
VORRICHTUNG ZUR STEUERUNG DES METABOLISMUS VON FRÜCHTEN IN GEKÜHLTEN SPEICHERZELLEN
DISPOSITIF DE RÉGULATION DU MÉTABOLISME DE FRUITS CONSERVÉS DANS DES ALVÉOLES DE STOCKAGE RÉFRIGÉRÉES

(30) Priority: 03.01.2011 IT VR20110001
(43) Date of publication of application: 13.11.2013
(73) Proprietor: Marvil Engineering S.R.L., 39040 Salorno (BZ) (IT)
(72) Inventor: MERCADINI, Massimo, I-39044 Egna (IT); VILLA, Ivano Luigi, I-39100 Bolzano (IT)
(74) Representative: Modiano, Micaela Nadia
(86) International application number: PCT/EP2011/074297
(87) International publication number: WO 2012/093078

(56) References cited:
- WO-A1-93/17941
- US-A- 5 438 841
- US-A- 5 791 236
- US-A- 5 799 495

## Description

The present invention relates to a device for controlling the metabolism of fruits contained in refrigerated storage cells.

In recent decades, the methods of preservation of fruit such as apples, pears, kiwis, bananas, blueberries and vegetables such as cabbages or tomatoes has undergone radical changes.

In particular, from a process that provided only for the use of refrigeration cells one has shifted to the use of refrigerated storage cells in which, in addition to reducing the temperature, the percentage of the gases that are present inside the cell and in particular the percentages of oxygen, carbon dioxide and nitrogen are controlled.

On a practical level, in order to slow the metabolism of fruits and consequently increase their preservation time, the percentage of oxygen inside the cell has been reduced significantly, making it pass from 20.8% (the percentage of oxygen in air) to a percentage comprised between 5% and 1%. In general, when the oxygen inside the cell is comprised between 1.5% and 3% the acronym CA (Controlled Atmosphere) is used, while when the oxygen percentage is lower than 1 % the acronym ULOo (Ultra Low Oxygen) is used.

In recent years, in order to further improve the preservation of fruit, processes are used which are referenced by the acronyms ILOS (Initial Low Oxygen System), ILOS Plus (Initial Low Oxygen System repeated), DCA or DCS, which provide, at preset periods of preservation within the cell and for preset periods of time, a further reduction of the oxygen percentage to bring it below 0.5%; the percentage of carbon dioxide is generally also reduced below 1%.

These new preservation techniques are normally indicated as dynamic atmosphere preservations.

It has been observed that in these environmental conditions, also known as stress conditions, fruits change their metabolism radically.

In fact, in normal environmental conditions (oxygen percentage above 0.7%) the sugars contained in fruits combine, due to respiration, with the oxygen according to the following chemical reaction of aerobic metabolism:

C₆H₁₂O₆ + 6O₂(>0.7%) → 6CO₂ + 6H₂O + heat

If instead the oxygen is brought to a percentage below 0.5% (and therefore under stress), a chemical reaction of anaerobic metabolism occurs:

C₆H₁₂O₆ and hypoxygen (< 0.5%) → 2C₂H₅OH + CO₂ + intermediate products (aldehydes, esters)

By applying targeted stress periods, preservation is improved significantly, but the anaerobic metabolism process can degenerate into a fermentation process and rapidly lead to destruction of the fruit.

Currently there are some prevention techniques in order to try to keep under control the anaerobic metabolism process during stress periods.

However, all the methods currently performed are either too expensive or scarcely reliable.

A first method that is used provides for analysis of the ethanol (in the form of gas) that is contained in the air of the refrigerated storage cell. When it is even in ppm (parts per million) in the air, very often in the fruits it is already present in large quantities dissolved in the juices. This causes, in many cases, a delay in intervention (which consists in raising the oxygen percentage to 0.7% - 1%), consequently compromising the fruits.

Another method that is used employs fluorescence sensors which analyze the state of the chlorophyll of some fruits contained in the cell.

When the sensors detect a variation of the fluorescence of the analyzed fruit, it probably corresponds to a situation of stress of the fruit caused by a variation of its metabolism.

A main drawback of the above mentioned system resides in the choice of the samples, since the chosen samples must represent all the fruit contained in the cell, and this is a control on a small number of samples.

However, it appears evident that normally the state of ripeness, as well as the characteristics of individual fruits, are not uniform and consequently the selected fruit often might not be subject to fermentation, but other fruits that are contained in the same cell are.

A final process that is currently used to verify whether fruits are under stress is the analysis of the ethanol in the juice of the fruit, the juice being obtained from the pulp by crushing.

This method has the advantage of being extremely reliable and inexpensive, but at the same time it is not a continuous or automatic analysis and even in this case it is necessary to choose representative samples to analyze.

The aim of the present invention is to provide a device for controlling the metabolism of fruits contained in refrigerated storage cells that makes it possible to eliminate or at least reduce drastically the drawbacks noted above.

Within this aim, an object of the present invention is to provide a device for controlling the metabolism of fruits contained in refrigerated storage cells which is automatic and extremely precise, but can detect a variation of the metabolism (from aerobic to anaerobic) of all the fruits contained in a cell.

Another object of the present invention is to propose a device for controlling the metabolism of fruits contained in refrigerated storage cells that has a competitive production cost, so as to make its use advantageous also from the economic standpoint.

This aim, as well as these and other objects that will become better apparent hereinafter, are achieved by a device for controlling the metabolism of fruits contained in refrigerated storage cells according to what is provided in the independent claims that follow.

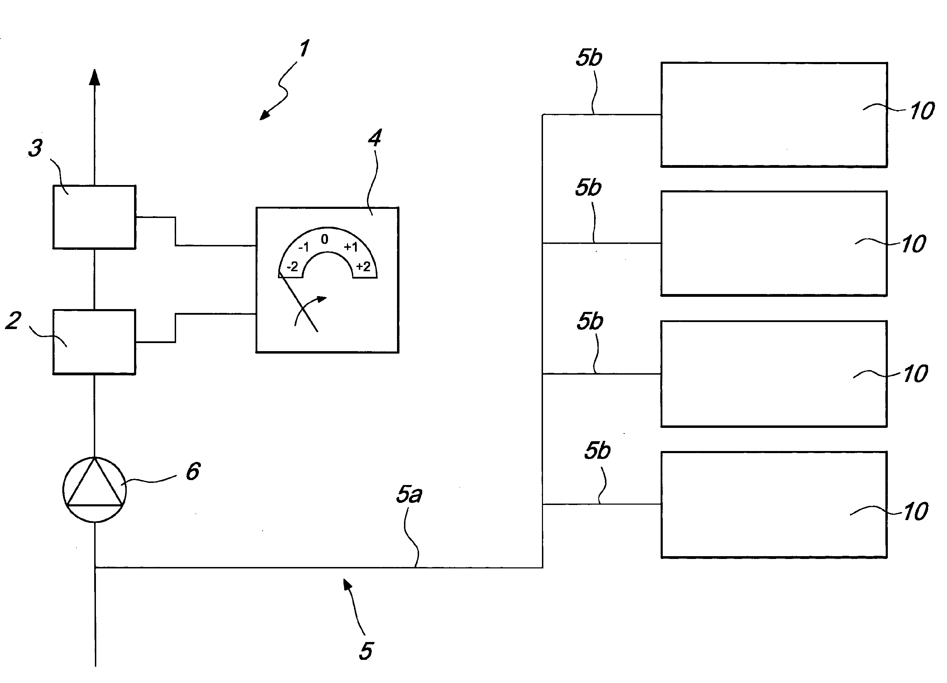

Further characteristics and advantages of the invention will become better apparent from the description of some preferred but not exclusive embodiments of a device for controlling the metabolism of fruits contained in refrigerated storage cells according to the present invention, illustrated by way of non-limiting example in the accompanying figure, which is a schematic view of a device for controlling the metabolism of fruits contained in refrigerated storage cells.

In the exemplary embodiments that follow, individual characteristics, given in relation to specific examples, may actually be interchanged with other different characteristics that exist in other exemplary embodiments.

Moreover, it should be noted that anything found to be already known during the patenting process is understood not to be claimed and to be the subject of a disclaimer.

With reference to the sole Figure, the present invention relates to a device, generally designated by the reference numeral 1, for controlling the metabolism of fruits contained in refrigerated storage cells 10.

According to a first aspect, the present invention relates to a device, generally designated by the reference numeral 1, for controlling the metabolism of fruits and/or vegetables contained in refrigerated storage cells.

The control device 1 comprises a first sensor 2 and a second sensor 3 which are adapted to measure the percentage of oxygen that is present in a refrigerated storage cell 10.

In particular, the first sensor 2 cannot be influenced, in its measurement, by the presence of gases (in the specific case halogenated compounds, nitrogen oxides, sulfur oxides and sulfur compounds, etc.) produced by the fruits and/or vegetables contained in the refrigerated storage cell 10 during the preservation process and in particular during the so-called anaerobic metabolism step and therefore under excessive stress.

The second sensor 3 instead can be influenced, in its measurement, by the presence of gases (in the specific case, halogenated compounds, nitrogen oxides, sulfur oxides, sulfur compounds, etc.) produced by the fruits and/or vegetables contained in the refrigerated storage cell 10 during the preservation process, and in particular during the so-called anaerobic metabolism step and therefore under excessive stress.

According to the invention, there are also processing means, designated by the reference numeral 4 in the figure, which are adapted to compare the measurements made by the first sensor 2 and by the second sensor 3.

Conveniently, the first sensor 2 comprises an oxygen measurement sensor of the chemical or paramagnetic type, while the second sensor 3 comprises a catalytic or zircon oxide oxygen measurement sensor.

Advantageously, the first sensor 2 and the second sensor 3 are connected to a duct 5 for extracting the air contained in the refrigerated storage cell 10.

Of course, nothing forbids arranging or accommodating the first sensor 2 and the second sensor 3 directly inside the refrigerated storage cell 10 that one wishes to control.

In greater detail, at least one extraction pump 6 is provided along the air extraction duct 5.

If one intends to use the control device 1 to control multiple refrigerated storage cells 10, the extraction duct 5 comprises a first duct 5a for feeding the air extracted from the cell 10 to the first sensor 2 and to the second sensor 3. The first feeding duct 5a is connected by means of coupling sections 5b, along which respective valves are arranged, to a plurality of refrigerated storage cells 10.

According to a preferred embodiment, the processing means 4 are functionally connected to a per se known controlling apparatus, which is adapted to regulate the percentage of oxygen of the air contained in the refrigerated storage cell.

Specifically, the controlling apparatus increases the percentage of oxygen (typically in a range comprised between 0.7% and 1%) if the first sensor 2 and the second sensor 3 measure different oxygen percentages and in particular if the positive difference measured by the second sensor 3 with respect to the first sensor 2 is greater than a preset intervention value.

Conveniently, the processing means 4 are connected functionally to a controlling apparatus which is adapted to regulate not only the percentage of oxygen in the refrigerated storage cell 10, but also the percentage of nitrogen and/or carbon dioxide.

According to a further aspect, the present invention relates to a method for controlling the metabolism of fruits and/or vegetables contained in refrigerated storage cells.

This method comprises:
- a step of measuring the percentage of oxygen that is contained in a refrigerated storage cell 10 by means of a first sensor 2, which cannot be influenced in its measurement by the presence of gases generated by the fruits and/or vegetables contained in the refrigerated storage cell 10 during the preservation process;
- a step of measuring the percentage of oxygen contained in a refrigerated storage cell 10 by means of a second sensor 3, which can be influenced in its measurement by the presence of gases generated by the fruits and/or vegetables contained in the refrigerated storage cell 10 during the preservation process;
- a step of data processing, which comprises a comparison between the measurements made by the first sensor 2 and by the second sensor 3.

Advantageously, the first sensor 2 comprises an oxygen measurement sensor of the chemical or paramagnetic type, while the second sensor 3 comprises a catalytic or zircon oxide oxygen measurement sensor.

Conveniently, the method comprises, prior to the measurement steps, a step of extracting the air contained in the refrigerated storage cell 10.

According to a preferred embodiment, if the processing step detects a difference between the measurement of the percentage of oxygen made by the second sensor 3 and the measurement of the oxygen percentage detected by the first sensor 2, the method provides for a step of enrichment of the percentage of oxygen inside the refrigerated storage cell 10.

It has in fact been observed that since the second sensor 3 is influenced by the presence of gases generated by stress (anaerobic metabolism), a difference in the measurement of the percentage of oxygen by the two sensors corresponds to a process of excessive stress in progress within the refrigerated storage cell 10 and this process may affect even only part of the fruits that are present in the refrigerated storage cell 10.

Advantageously, if the processing step detects a difference that exceeds a certain value between the measurement of the percentage of oxygen made by the second sensor 3 and the measurement of the percentage of oxygen detected by the first sensor 2, the method provides for a step of enrichment of the percentage of oxygen within the refrigerated storage cell 10.

Conveniently, if the data processing step does not detect a difference between the measurement of the percentage of oxygen made by the second sensor 3 and the measurement of the percentage of oxygen detected by the first sensor 2, or detects a difference between the measurement of the oxygen percentage made by the second sensor 3 and the measurement of the oxygen percentage detected by the first sensor 2 that is lower than a stress value (which, by way of indication, can be 0.2%), a step of depletion of the oxygen percentage within the refrigerated storage cell 10 can be performed so as to make the preservation process even more effective.

In greater detail, the method according to the invention comprises a step of indicating the stress rate.

Specifically, the stress rate indication step comprises:
- a step of indicating a low stress rate if the difference between the measurement of the oxygen percentage made by the second sensor 3 and the measurement of the oxygen percentage detected by the first sensor 2 is comprised between a first reference value and a second reference value: by way of indication, the first reference value can be 0.2% and the second reference value can be 0.5%;
- a step of indicating a high stress rate if the difference between the measurement of the oxygen percentage made by the second sensor 3 and the measurement of the oxygen percentage detected by the first sensor 2 is comprised between the second reference value and a third reference value: by way of indication, the third reference value can be 0.8%;
- a step of indicating danger if the difference between the measurement of the oxygen percentage made by the second sensor 3 and the measurement of the oxygen percentage detected by the first sensor 2 is greater than the third reference value (which, by way of indication, is equal to 0.8%).

The method might comprise a step of activation of an alarm system if the data processing step does not detect a difference that exceeds a preset alarm value between the measurement of the oxygen percentage made by the second sensor 3 and the measurement of the oxygen percentage detected by the first sensor 2.

The method according to the invention, and particularly the measurement steps and the processing step, can be implemented during part or, more advantageously, all of the anaerobic metabolism process, but also during the aerobic metabolism process, in order to be able to detect any malfunction of the controlling apparatus of the percentage of oxygen or carbon dioxide within the refrigerated storage cell.

All the characteristics of the invention indicated above as advantageous, convenient and the like may also be omitted or be replaced with equivalents.

The invention thus conceived is susceptible of numerous modifications and variations, all of which are within the scope of the appended claims.

Thus, for example, the control device 1 can be constituted by a fixed structure, i.e., a structure which is integrated with the apparatuses associated with the refrigerated storage cell or cells 10, but also by a portable apparatus that is adapted to allow analysis of the air directly from the refrigerated storage cell.

In practice it has been found that the invention has achieved the intended aim and objects in all of its embodiments.

In practice, the materials used, as well as the contingent shapes and dimensions, may be any according to requirements.

All the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for controlling the metabolism of fruits and/or vegetables contained in refrigerated storage cells, **characterized in that** it comprises a first sensor (2) and a second sensor (3), which are adapted to measure the percentage of oxygen that is present in a refrigerated storage cell (10), said first sensor (2) not being influenceable in its measurement by the presence of gases generated by the fruits and/or vegetables contained in said refrigerated storage cell (10) during the preservation process, said second sensor (3) being influenceable in its measurement by the presence of gases generated by the fruits and/or vegetables contained in said refrigerated storage cell (10) during the preservation process, processing means (4) being provided which are adapted to compare the measurements made by said first sensor (2) and by said second sensor (3).

2. The control device (1) according to claim 1, **characterized in that** said first sensor (2) comprises an oxygen measurement sensor of the chemical or paramagnetic type, and said second sensor (3) comprises an oxygen measurement sensor of the catalytic or zircon oxide type which can be influenced in particular by the presence of nitrogen oxide and/or of sulfur compounds.

3. The control device (1) according to one or more of the preceding claims, **characterized in that** said first sensor (2) and said second sensor (3) are arranged inside said refrigerated storage cell (10) or are connected to a duct (5) for extracting the air contained in said refrigerated storage cell (10).

4. The control device (1) according to one or more of the preceding claims, **characterized in that** it comprises, along said air extraction duct (5), at least one extraction pump (6).

5. The control device (1) according to one or more of the preceding claims, **characterized in that** said extraction duct (5) comprises a first duct (5a) for feeding the air extracted from said cell (10) to said first sensor (2) and to said second sensor (3), said first feed duct (5a) being connected, by means of coupling sections (5b) provided with respective valves, to a plurality of refrigerated storage cells (10).

6. The control device (1) according to one or more of the preceding claims, **characterized in that** said processing means (4) are functionally connected to a controlling apparatus adapted to regulate the percentage of oxygen of the air contained in said refrigerated storage cell (10).

7. The control device (1) according to one or more of the preceding claims, **characterized in that** said processing means (4) are functionally connected to a controlling apparatus adapted to regulate the percentage of oxygen and/or nitrogen and/or carbon dioxide of the air contained in said refrigerated storage cell (10).

8. A method for controlling the metabolism of fruits and/or vegetables contained in refrigerated storage cells, comprising:
- a step of measuring the percentage of oxygen that is contained in a refrigerated storage cell (10) by means of a first sensor (2), which cannot be influenced in its measurement by the presence of gases generated by the fruits and/or vegetables contained in said refrigerated storage cell (10) during the preservation process;
- a step of measuring the percentage of oxygen contained in a refrigerated storage cell (10) by means of a second sensor (3), which can be influenced in its measurement by the presence of gases generated by the fruits and/or vegetables contained in said refrigerated storage cell during the preservation process;
- a step of data processing, which comprises a comparison between the measurements made by said first sensor (2) and by said second sensor (3).

9. The method according to claim 8, **characterized in that** said first sensor (2) comprises an oxygen measurement sensor of the chemical or paramagnetic type and said second sensor (3) comprises an oxygen measurement sensor of the catalytic or zircon oxide type.

10. The method according to one or more of claims 8 to 9, **characterized in that** it comprises, prior to said measurement steps, a step of extracting the air contained in said refrigerated storage cell (10).

11. The method according to one or more of claims 8 to 10, **characterized in that** it comprises, if said processing step finds a difference that exceeds a preset value between the measurement of the oxygen percentage made by said second sensor (3) and the measurement of the oxygen percentage detected by said first sensor (2), a step of enrichment of the percentage of oxygen inside said refrigerated storage cell (10).

12. The method according to one or more of claims 8 to 11, **characterized in that** it comprises, if said data processing step does not find a difference between the measurement of the oxygen percentage made by said second sensor (3) and the measurement of the oxygen percentage detected by said first sensor (2) or finds a difference between the measurement of the oxygen percentage made by said second sensor (3) and the measurement of the oxygen percentage detected by said first sensor (2) that is lower than a stress value, a step of depletion of the percentage of oxygen inside said refrigerated storage cell (10).

13. The method according to one or more of claims 8 to 12, **characterized in that** it comprises a step of indicating the stress rate, said indication step comprising:
- a step of indicating a low stress rate if the difference between the measurement of the oxygen percentage made by said second sensor (3) and the measurement of the oxygen percentage detected by said first sensor (2) is comprised between 0.2% and 0.5%;
- a step of indicating a high stress rate if the difference between the measurement of the oxygen percentage made by said second sensor (3) and the measurement of the oxygen percentage detected by said first sensor (2) is comprised between 0.5% and 0.8%;
- a step of indicating danger if the difference between the measurement of the oxygen percentage made by said second sensor (3) and the measurement of the oxygen percentage detected by said first sensor (2) is greater than 0.8%.

14. The method according to one or more of claims 7 to 13, **characterized in that** it comprises a step of activating an alarm system if said data processing step finds a difference that exceeds a preset value between the measurement of the oxygen percentage made by said second sensor (3) and the measurement of the oxygen percentage detected by said first sensor (2).

15. The method according to one or more of claims 7 to 14, **characterized in that** said measurement steps and said processing steps are performed during the anaerobic metabolism process and/or during the aerobic metabolism process.

## Patentansprüche

1. Eine Vorrichtung (1) zur Steuerung des Metabolismus von Früchten und/oder Gemüsen, die in gekühlten Speicherzellen enthalten sind, **dadurch gekennzeichnet, dass** sie einen ersten Sensor (2) und einen zweiten Sensor (3) umfasst, die ausgebildet sind, um den Prozentsatz von Sauerstoff zu messen, der in einer gekühlten Speicherzelle (10) vorhanden ist, wobei der erste Sensor (2) in seiner Messung nicht durch die Anwesenheit von Gasen beeinflusst werden kann, die von den in der gekühlten Speicherzelle (10) enthaltenen Früchten und/oder Gemüsen während des Konservierungsvorgangs erzeugt werden, wobei der zweite Sensor (3) in seiner Messung durch die Anwesenheit von Gasen beeinflusst werden kann, die von den in der gekühlten Speicherzelle (10) enthaltenen Früchten und/oder Gemüsen während des Konservierungsvorgangs erzeugt werden, wobei Verarbeitungsmittel (4) bereitgestellt sind, die ausgebildet sind, um die Messungen, die von dem ersten Sensor (2) und von dem zweiten Sensor (3) vorgenommen werden, zu vergleichen.

2. Die Steuervorrichtung (1) gemäß Anspruch 1, **dadurch gekennzeichnet, dass** der erste Sensor (2) einen Sauerstoff-Messfühler vom chemischen oder paramagnetischen Typ umfasst und der zweite Sensor (3) einen Sauerstoff-Messfühler vom katalytischen oder Zirkonoxid-Typ umfasst, der insbesondere durch die Anwesenheit von Stickoxid- und/oder Schwefelverbindungen beeinflusst werden kann.

3. Die Steuervorrichtung (1) gemäß einem oder mehreren der obigen Ansprüche, **dadurch gekennzeichnet, dass** der erste Sensor (2) und der zweite Sensor (3) innerhalb der gekühlten Speicherzelle (10) angeordnet oder mit einer Leitung (5) zur Extraktion der Luft, die in der gekühlten Speicherzelle (10) enthalten ist, verbunden sind.

4. Die Steuervorrichtung (1) gemäß einem oder mehreren der obigen Ansprüche, **dadurch gekennzeichnet, dass** sie, entlang der Luft-Extraktionsleitung (5), mindestens eine Extraktionspumpe (6) umfasst.

5. Die Steuervorrichtung (1) gemäß einem oder mehreren der obigen Ansprüche, **dadurch gekennzeichnet, dass** die Extraktionsleitung (5) eine erste Leitung (5a) umfasst, um die aus der Zelle (10) extrahierte Luft dem ersten Sensor (2) und dem zweiten Sensor (3) zuzuführen, wobei die erste Zuführleitung (5a) über mit entsprechenden Ventilen versehene Kopplungsabschnitte (5b) mit einer Vielzahl gekühlter Speicherzellen (10) verbunden ist.

6. Die Steuervorrichtung (1) gemäß einem oder mehreren der obigen Ansprüche, **dadurch gekennzeichnet, dass** die Verarbeitungsmittel (4) funktionell mit einer Steuervorrichtung verbunden sind, die ausgebildet ist, um den Prozentsatz an Sauerstoff in der Luft, die in der gekühlten Speicherzelle (10) enthalten ist, zu regulieren.

7. Die Steuervorrichtung (1) gemäß einem oder mehreren der obigen Ansprüche, **dadurch gekennzeichnet, dass** die Verarbeitungsmittel (4) funktionell mit einer Steuervorrichtung verbunden sind, die ausgebildet ist, um den Prozentsatz an Sauerstoff und/oder Stickstoff und/oder Kohlendioxid in der Luft, die in der gekühlten Speicherzelle (10) enthalten ist, zu regulieren.

8. Ein Verfahren zur Steuerung des Metabolismus von Früchten und/oder Gemüsen, die in gekühlten Speicherzellen enthalten sind, Folgendes umfassend:
- einen Schritt zur Messung des Prozentsatzes an Sauerstoff, der in einer gekühlten Speicherzelle (10) enthalten ist, mit Hilfe eines ersten Sensors (2), der in seiner Messung nicht durch die Anwesenheit von Gasen beeinflusst werden kann, die von den in der gekühlten Speicherzelle (10) enthaltenen Früchten und/oder Gemüsen während des Konservierungsvorgangs erzeugt werden;
- einen Schritt zur Messung des Prozentsatzes an Sauerstoff, der in einer gekühlten Speicherzelle (10) enthalten ist, mit Hilfe eines zweiten Sensors (3), der in seiner Messung durch die Anwesenheit von Gasen beeinflusst werden kann, die von den in der gekühlten Speicherzelle enthaltenen Früchten und/oder Gemüsen während des Konservierungsvorgangs erzeugt werden;
- einen Schritt der Datenverarbeitung, der einen Vergleich zwischen den Messungen durch den ersten Sensor (2) und durch den zweiten Sensor (3) umfasst.

9. Das Verfahren gemäß Anspruch 8, **dadurch gekennzeichnet, dass** der erste Sensor (2) einen Sauerstoff-Messfühler vom chemischen oder paramagnetischen Typ umfasst und der zweite Sensor (3) einen Sauerstoff-Messfühler vom katalytischen oder Zirkonoxid-Typ umfasst.

10. Das Verfahren gemäß einem oder mehreren der Ansprüche 8 bis 9, **dadurch gekennzeichnet, dass** es, vor den Messschritten, einen Schritt der Extraktion der Luft, die in der gekühlten Speicherzelle (10) enthalten ist, umfasst.

11. Das Verfahren gemäß einem oder mehreren der Ansprüche 8 bis 10, **dadurch gekennzeichnet, dass** es, wenn der Verarbeitungsschritt einen Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes feststellt, der einen voreingestellten Wert überschreitet, einen Schritt der Anreicherung des Prozentsatzes an Sauerstoff in der gekühlten Speicherzelle (10) umfasst.

12. Das Verfahren gemäß einem oder mehreren der Ansprüche 8 bis 11, **dadurch gekennzeichnet, dass** es, wenn der Datenverarbeitungsschritt keinen Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes feststellt oder einen Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes feststellt, der geringer ist als ein Stress-Wert, einen Schritt der Verringerung des Prozentsatzes an Sauerstoff in der gekühlten Speicherzelle (10) umfasst.

13. Das Verfahren gemäß einem oder mehreren der Ansprüche 8 bis 12, **dadurch gekennzeichnet, dass** es einen Schritt der Angabe der Stress-Rate umfasst, wobei der Angabeschritt Folgendes umfasst:
- einen Schritt der Angabe einer geringen Stress-Rate, wenn der Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes zwischen 0,2% und 0,5% liegt;
- einen Schritt der Angabe einer hohen Stress-Rate, wenn der Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes zwischen 0,5% und 0,8% liegt;
- einen Schritt des Anzeigens von Gefahr, wenn der Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes größer ist als 0,8%.

14. Das Verfahren gemäß einem oder mehreren der Ansprüche 7 bis 13, **dadurch gekennzeichnet, dass** es einen Schritt der Aktivierung eines Alarmsystems umfasst, wenn der Datenverarbeitungsschritt einen Unterschied zwischen der von dem zweiten Sensor (3) vorgenommenen Messung des Sauerstoff-Prozentsatzes und der von dem ersten Sensor (2) vorgenommenen Messung des Sauerstoff-Prozentsatzes feststellt, der einen voreingestellten Wert überschreitet.

15. Das Verfahren gemäß einem oder mehreren der Ansprüche 7 bis 14, **dadurch gekennzeichnet, dass** die Messschritte und die Verarbeitungsschritte während des anaeroben Stoffwechselprozesses und/oder während des aeroben Stoffwechselprozesses durchgeführt werden.

## Revendications

1. Dispositif (1) pour réguler le métabolisme de fruits et/ou de légumes contenus dans des cellules de stockage réfrigérées, **caractérisé en ce qu'**il comprend un premier capteur (2) et un deuxième capteur (3), qui sont adaptés de façon à mesurer le pourcentage d'oxygène qui est présent dans une cellule de stockage réfrigérée (10), ledit premier capteur (2) ne pouvant pas être influencé dans sa mesure par la présence de gaz générés par les fruits et/ou les légumes contenus dans ladite cellule de stockage réfrigérée (10) durant le processus de conservation, ledit deuxième capteur (3) pouvant être influencé dans sa mesure par la présence de gaz générés par les fruits et/ou les légumes contenus dans ladite cellule de stockage réfrigérée (10) durant le processus de conservation, des moyens de traitement (4) étant disposés, ceux-ci étant adaptés de façon à comparer les mesures effectuées par ledit premier capteur (2) et par ledit deuxième capteur (3).

2. Dispositif de régulation (1) selon la revendication 1, **caractérisé en ce que** ledit premier capteur (2) comprend un capteur de mesure d'oxygène du type chimique ou paramagnétique, et **en ce que** ledit deuxième capteur (3) comprend un capteur de mesure d'oxygène du type catalytique ou à oxyde de zirconium, qui peut être influencé, en particulier, par la présence d'oxyde d'azote et/ou de composés soufrés.

3. Dispositif de régulation (1) selon l'une ou plusieurs des revendications précédentes, **caractérisé en ce que** ledit premier capteur (2) et ledit deuxième capteur (3) sont disposés à l'intérieur de ladite cellule de stockage réfrigérée (10) ou sont reliés à un conduit (5) pour extraire l'air contenu dans ladite cellule de stockage réfrigérée (10).

4. Dispositif de régulation (1) selon l'une ou plusieurs des revendications précédentes, **caractérisé en ce qu'**il comprend, le long dudit conduit d'extraction d'air (5), au moins une pompe d'extraction (6).

5. Dispositif de régulation (1) selon l'une ou plusieurs des revendications précédentes, **caractérisé en ce que** ledit conduit d'extraction (5) comprend un premier conduit (5a) pour délivrer l'air extrait à partir de ladite cellule (10) audit premier capteur (2) et audit deuxième capteur (3), ledit premier conduit de délivrance (5a) étant relié, à l'aide de sections de couplage (5b) munies de vannes respectives, à une pluralité de cellules de stockage réfrigérées (10).

6. Dispositif de régulation (1) selon l'une ou plusieurs des revendications précédentes, **caractérisé en ce que** lesdits moyens de traitement (4) sont reliés de façon fonctionnelle à un appareil de commande adapté de façon à réguler le pourcentage d'oxygène de l'air contenu dans ladite cellule de stockage réfrigérée (10).

7. Dispositif de régulation (1) selon l'une ou plusieurs des revendications précédentes, **caractérisé en ce que** lesdits moyens de traitement (4) sont reliés de façon fonctionnelle à un appareil de commande adapté de façon à réguler le pourcentage d'oxygène et/ou d'azote et/ou de dioxyde de carbone de l'air contenu dans ladite cellule de stockage réfrigérée (10).

8. Procédé pour réguler le métabolisme de fruits et/ou de légumes contenus dans des cellules de stockage réfrigérées, comprenant :
- une étape de mesure du pourcentage d'oxygène qui est contenu dans une cellule de stockage réfrigérée (10) à l'aide d'un premier capteur (2), qui ne peut pas être influencé dans sa mesure par la présence de gaz générés par les fruits et/ou les légumes contenus dans ladite cellule de stockage réfrigérée (10) durant le processus de conservation ;
- une étape de mesure du pourcentage d'oxygène contenu dans une cellule de stockage réfrigérée (10) à l'aide d'un deuxième capteur (3), qui peut être influencé dans sa mesure par la présence de gaz générés par les fruits et/ou les légumes contenus dans ladite cellule de stockage réfrigérée durant le processus de conservation ;
- une étape de traitement de données, qui comprend une comparaison entre les mesures effectuées par ledit premier capteur (2) et par ledit deuxième capteur (3).

9. Procédé selon la revendication 8, **caractérisé en ce que** ledit premier capteur (2) comprend un capteur de mesure d'oxygène du type chimique ou paramagnétique, et **en ce que** ledit deuxième capteur (3) comprend un capteur de mesure d'oxygène du type catalytique ou à oxyde de zirconium.

10. Procédé selon l'une ou plusieurs des revendications 8 à 9, **caractérisé en ce qu'**il comprend, avant lesdites étapes de mesure, une étape d'extraction de l'air contenu dans ladite cellule de stockage réfrigérée (10).

11. Procédé selon l'une ou plusieurs des revendications 8 à 10, **caractérisé en ce qu'**il comprend, si ladite étape de traitement trouve une différence qui dépasse une valeur pré-établie entre la mesure du pourcentage d'oxygène effectuée par ledit deuxième capteur (3) et la mesure du pourcentage d'oxygène détecté par ledit premier capteur (2), une étape d'enrichissement du pourcentage d'oxygène à l'intérieur de ladite cellule de stockage réfrigérée (10).

12. Procédé selon l'une ou plusieurs des revendications 8 à 11, **caractérisé en ce qu'**il comprend, si ladite étape de traitement de données ne trouve pas de différence entre la mesure du pourcentage d'oxygène effectuée par ledit deuxième capteur (3) et la mesure du pourcentage d'oxygène détecté par ledit premier capteur (2), ou trouve une différence entre la mesure du pourcentage d'oxygène effectuée par ledit deuxième capteur (3) et la mesure du pourcentage d'oxygène détecté par ledit premier capteur (2) qui est inférieure à une valeur de stress, une étape d'appauvrissement du pourcentage d'oxygène à l'intérieur de ladite cellule de stockage réfrigérée (10).

13. Procédé selon l'une ou plusieurs des revendications 8 à 12, **caractérisé en ce qu'**il comprend une étape d'indication du taux de stress, ladite étape d'indication comprenant :
- une étape d'indication d'un faible taux de stress si la différence entre la mesure du pourcentage d'oxygène effectuée par ledit deuxième capteur (3) et la mesure du pourcentage d'oxygène détecté par ledit premier capteur (2) est comprise entre 0,2% et 0,5% ;
- une étape d'indication d'un taux de stress élevé si la différence entre la mesure du pourcentage d'oxygène effectuée par ledit deuxième capteur (3) et la mesure du pourcentage d'oxygène détecté par ledit premier capteur (2) est comprise entre 0,5% et 0,8% ;
- une étape d'indication de danger si la différence entre la mesure du pourcentage d'oxygène effectuée par ledit deuxième capteur (3) et la mesure du pourcentage d'oxygène détecté par ledit premier capteur (2) est supérieure à 0,8%.

14. Procédé selon l'une ou plusieurs des revendications 7 à 13, **caractérisé en ce qu'**il comprend une étape d'activation d'un système d'alarme si ladite étape de traitement de données trouve une différence qui dépasse une valeur pré-établie entre la mesure du pourcentage d'oxygène effectuée par ledit deuxième capteur (3) et la mesure du pourcentage d'oxygène détecté par ledit premier capteur (2).

15. Procédé selon l'une ou plusieurs des revendications 7 à 14, **caractérisé en ce que** lesdites étapes de mesure et lesdites étapes de traitement sont effectuées durant le processus de métabolisme anaérobie et/ou durant le processus de métabolisme aérobie.
